# EUROPÄISCHE PATENTSCHRIFT

(11) **EP 3 581 894 B1**
(45) Veröffentlichungstag und Bekanntmachung des Hinweises auf die Patenterteilung: **06.07.2022**
(21) Anmeldenummer: 19174831.8
(22) Anmeldetag: 16.05.2019
(51) Int. Cl.: G01D 5/14, G01D 21/02, G01D 21/00

(54) **VERFAHREN, VORRICHTUNG UND SYSTEM ZUR ERFASSUNG EINES MANIPULATIONSVERSUCHES AN EINEM SENSOR EINES FAHRZEUGES UND SENSOR**
METHOD, DEVICE AND SYSTEM FOR DETECTING TAMPERING ATTEMPT ON A SENSOR OF A VEHICLE AND SENSOR
PROCÉDÉ, DISPOSITIF ET SYSTÈME DE DÉTECTION D'UN ESSAI DE MANIPULATION SUR UN CAPTEUR D'UN VÉHICULE ET CAPTEUR

(30) Priorität: 14.06.2018 DE 102018209606
(43) Veröffentlichungstag der Anmeldung: 18.12.2019
(73) Patentinhaber: Continental Automotive GmbH, 30165 Hannover (DE)
(72) Erfinder: Dohmen, Ralf, 78050 Villingen-Schwenningen (DE); Bertl, Svenja, 78147 Vöhrenbach (DE); Walkner, Heiko, 78052 Villingen-Schwenningen (DE)
(74) Vertreter: Continental Corporation

(56) Entgegenhaltungen:
- EP-A1- 3 276 584
- DE-A1-102005 020 820
- DE-A1-102007 048 569
- DE-A1-102008 061 924
- DE-C2- 3 305 054

## Beschreibung

Es werden ein Verfahren, eine Vorrichtung und ein System zur Erfassung eines Manipulationsversuches an einem Sensor eines Fahrzeuges angegeben. Darüber hinaus wird ein Sensor für ein Fahrzeug angegeben.

Eine zu lösende Aufgabe besteht darin, ein Verfahren anzugeben, mit dem ein Manipulationsversuch an einem Sensor eines Fahrzeuges detektiert werden kann. Weitere zu lösende Aufgaben bestehen darin, eine Vorrichtung und ein System anzugeben, mit denen ein solches Verfahren ausgeführt werden kann, sowie einen Sensor für ein solches Verfahren anzugeben.

Die Erfindung wird durch den unabhängigen Anspruch 1 definiert.

Bei dem Sensor handelt es sich bevorzugt um einen fahrzeuginternen Sensor, also einen Sensor, der auch während einer Fahrt des Fahrzeuges im Fahrzeug verbaut und im Betrieb ist.

Bei der ersten Messgröße handelt es sich insbesondere um eine mit dem Sensor zu messende physikalische Größe. Die erste Messgröße beschreibt bevorzugt nicht ein elektromagnetisches Feld. Die erste Messgröße ist also die physikalische Größe, die letztendlich mit dem Sensor betrachtet werden soll. Der Messwert einer Messgröße ist der Wert der Messgröße, der mit dem Sensor am Ort des Sensors und zum Zeitpunkt der Messung erfasst wird. Durch Auswerten und beispielsweise Umrechnen kann aus dem von dem Sensor ausgegebenen ersten Messsignal der Messwert für die erste Messgröße ermittelt werden. Zum Beispiel handelt es sich bei der ersten Messgröße um eine zu messende Kraft.

Erfindungsgemäß handelt es sich bei der ersten Messgröße um eine auf eine Achse des Fahrzeuges wirkende Kraft oder Kraftverteilung.

Das erste Messsignal ist zum Beispiel ein Signal, das von dem Sensor ausgegeben wird. Das erste Messsignal ist repräsentativ für den mit dem Sensor erfassten Messwert der ersten Messgröße. Das heißt, das erste Messsignal trägt Informationen über den erfassten Messwert der ersten Messgröße. Das erste Messsignal kann zum Beispiel ein analoges oder digitales Signal sein. Bei dem Nutzbereich kann es sich beispielsweise um einen Bereich von gültigen Messergebnissen oder Messwerten handeln. Liegt das erste Messsignal oder der von dem ersten Messsignal repräsentierte Messwert innerhalb des vorgegebenen Bereichs, so wird kein Manipulationsversuch detektiert. Liegt das erste Messsignal oder der zugehörige Messwert dagegen außerhalb des vorgegebenen Bereichs, beispielsweise oberhalb eines oberen Schwellwerts oder unterhalb eines unteren Schwellwerts, so wird dies als Manipulationsversuch an dem Sensor gewertet. Entsprechend wird im Schritt C1) ein Ausgangssignal erzeugt.

Das Ausgangssignal ist repräsentativ für einen Manipulationsversuch an dem Sensor beziehungsweise an dem ersten Messsignal. Das heißt, das Ausgangssignal trägt Informationen darüber, ob ein Manipulationsversuch stattgefunden hat oder nicht. In einem einfachen Fall kann das Ausgangssignal ein digitales Signal sein, wobei zum Beispiel der Wert logisch 1 für einen Manipulationsversuch steht und der Wert logisch 0 dafür steht, dass kein Manipulationsversuch erkannt wurde.

Bei dem zweiten Messsignal kann es sich beispielsweise um ein mit Hilfe einer Spule oder einer Hallsonde erzeugtes Messsignal handeln. Das zweite Messsignal ist erfindungsgemäß repräsentativ für einen Messwert des im Bereich des Sensors wirkenden elektromagnetischen Feldes. Überschreitet oder unterschreitet das zweite Messsignal beziehungsweise der von diesem repräsentierte Messwert einen vorgegebenen Schwellwert, so wird dies als Manipulationsversuch gewertet und ein entsprechendes Ausgangssignal wird ausgegeben. Das zweite Messsignal kann zum Beispiel ein analoges oder digitales Signal sein.

"Im Bereich des Sensors" meint insbesondere den Raumbereich, der vom Sensor eingenommen ist, oder einen Teilbereich dieses Raumbereichs.

Die Verfahren gemäß der beiden Ausführungsformen können zusätzlich einen Schritt umfassen, in dem das erste Messsignal ausgewertet wird. Dabei kann zum Beispiel der Messwert für die erste Messgröße ermittelt werden. Dieser zusätzliche Schritt kann vor, nach oder während der Schritte A1), B1), C1) oder A2), B2), C2) ausgeführt werden.

Der vorliegenden Erfindung liegt insbesondere die Erkenntnis zu Grunde, dass bei Fahrzeugen, insbesondere bei Nutzfahrzeugen, zum Beispiel Kraftfahrzeugen, die Achslast mit Hilfe von Drucksensoren oder Niveausensoren oder Dehnmessstreifen gemessen wird. Im Markt befindliche Systeme erfüllen branchenübliche und/oder kundenspezifische Anforderungen hinsichtlich elektromagnetischer Verträglichkeit. Jedoch sind diese Systeme nicht geschützt gegen gezielte manipulative Angriffe mithilfe von elektromagnetischer Störungen.

Zum Beispiel besteht durch die Integration von fahrzeuginternen Wägesystemen, Englisch OnBoard Weighing System, die Möglichkeit, achslastspezifische technische Funktionen abzuleiten, zum Beispiel eine Reduzierung der Motorleistung bei hoher Achslast. Darüber hinaus können die Achslastdaten, insbesondere die ersten Messsignale, über Datenschnittstellen dem Fahrer beziehungsweise dem Fahrunternehmen zur Verfügung gestellt werden. Durch eine Manipulation des Wägesystems können solche Funktionen ausgehebelt beziehungsweise die Daten beziehungsweise die ersten Messsignale manipuliert werden, um sich einen Vorteil zu verschaffen.

Eine mögliche Manipulation der ersten Messsignale kann durch das Induzieren von Strömen im Wägesystem mittels zum Beispiel einer externen Spule erfolgen, die in der Nähe vom oder am Sensor montiert wird. Üblicherweise wird im Sensor ein Messaufnehmer, zum Beispiel ein Dehnmessstreifen, der zum Beispiel als Wheatstone'sche Messbrücke implementiert ist, verwendet. Dieser sendet beispielsweise ein analoges Signal zu einer im Sensor integrierten Auswerteelektronik, wie zum Beispiel ein Analog-Digital-Wandler, kurz ADC. Das analoge Signal wird dort digitalisiert. Wird nun eine Spule zur Induktion eines Stromes am Sensor benutzt, so wird das Eingangssignal an der Auswerteelektronik stark verfälscht. Oftmals wird darauf abgezielt, den Analog-Digital-Wandler an seinen Maximalausschlag zu bringen und somit einen Defekt vorzutäuschen.

Um einen solchen Manipulationsversuch zu detektieren, wird gemäß der ersten Ausführungsform des Verfahrens ein Nutzbereich, zum Beispiel der Wertebereich des ADC, in mehrere Bereiche unterteilt. Der Nutzbereich deckt die gültigen Messwerte ab. Andere Bereiche liegen oberhalb und/oder unterhalb des Nutzbereichs. Liegt das erste Messsignal, zum Beispiel das von der Auswertelektronik digitalisierte Messsignal, außerhalb des Nutzbereichs, so wird ein Manipulationsversuch erkannt.

Erfindungsgemäß wird mit Hilfe einer Hallsonde oder einer Spule, die bevorzugt im Bereich des Sensors angeordnet sind, ein extern generiertes elektromagnetisches Feld direkt detektiert. Mit Hilfe des ermittelten zweiten Messsignals und mit Hilfe einer geeigneten Schwelle für das zweite Messsignal kann ein Manipulationsversuch am Sensor erkannt werden. Bei diesem Verfahren können insbesondere auch elektromagnetische Felder detektiert werden, die eventuell zu einer Signalverkleinerung am Eingang der Auswerteelektronik des Sensors führen.

Alle im Folgenden aufgeführten Merkmale können für das Verfahren gemäß der ersten und/oder der zweiten Ausführungsform realisiert sein. Außerdem können alle im Zusammenhang mit der ersten Ausführungsform des Verfahrens offenbarten Merkmale auch für die zweite Ausführungsform des Verfahrens gelten und umgekehrt. Gemäß zumindest einer Ausführungsform ist das zweite Messsignal repräsentativ für einen Messwert eines mit Hilfe einer Hallsonde und/oder einer Spule erfassten elektromagnetischen Feldes. Die Hallsonde und/oder Spule sind bevorzugt dem Sensor zugeordnet, beispielsweise in dem Sensor integriert oder an dem Sensor angebracht. Das heißt, die Hallsonde und/oder Spule ist bevorzugt Teil des Sensors.

Gemäß zumindest einer Ausführungsform ist der Sensor ein Wägesensor, der einer Achse des Fahrzeugs zugeordnet ist. Der Wägesensor ist beispielsweise auf der Achse aufgebracht oder in der Achse integriert. Bei dem Wägesensor handelt es sich um einen Drucksensor oder einen Niveausensor oder einen Sensor mit einem Dehnmessstreifen.

Gemäß zumindest einer Ausführungsform werden die Schritte A1) bis C1) und/oder die Schritte A2) bis C2) mehrmals hintereinander beziehungsweise periodisch ausgeführt. Die mehrfache Wiederholung der Schritte kann im eingeschalteten Zustand des Fahrzeuges, also bei eingeschalteter Zündung, oder im ausgeschalteten Zustand des Fahrzeuges, also bei ausgeschalteter Zündung, durchgeführt werden.

Gemäß zumindest einer Ausführungsform enthält oder trägt das Ausgangssignal Informationen darüber, zu welchem Zeitpunkt das Ausgangssignal erzeugt wurde.

Gemäß zumindest einer Ausführungsform wird nach der Ausgabe des Ausgangssignals im Schritt C1) oder C2) das Ausgangssignal an eine externe Datenverarbeitungsanlage weitergeleitet. Die Weiterleitung des Ausgangssignals erfolgt beispielsweise kabellos, zum Beispiel über Funk. Das Ausgangssignal kann dann außerhalb des Fahrzeuges ausgewertet werden, und es kann bestimmt werden, ob und bevorzugt wann ein Manipulationsversuch stattgefunden hat.

Alternativ ist es aber auch möglich, dass das Ausgangssignal im Fahrzeug ausgewertet wird und anschließend beispielsweise dem Fahrzeugführer signalisiert wird, ob und wann ein Manipulationsversuch stattgefunden hat.

Eine Auswertung des Ausgangssignals kann beispielsweise unmittelbar nach der Ausgabe des Ausgangssignals erfolgen. Alternativ ist es auch möglich, das Ausgangssignal auf einem Speichermedium zu speichern und erst später auszuwerten.

Gemäß zumindest einer Ausführungsform werden sowohl die Schritte A1) und B1) als auch die Schritte A2) und B2) ausgeführt. Beispielsweise kann in diesem Fall ein für ein Manipulationsversuch des Sensors repräsentatives Ausgangssignal ausgegeben werden, falls die Auswertung der ersten Messsignale im Schritt B1) oder die Auswertung der zweiten Messsignale im Schritt B2) auf einen Manipulationsversuch hinweisen. Alternativ ist es denkbar, dass ein Ausgangssignal nur ausgegeben wird, wenn sowohl die Auswertung im Schritt B1) als auch die Auswertung im Schritt B2) auf einen Manipulationsversuch hinweisen.

Darüber hinaus wird eine Vorrichtung zur Erfassung eines Manipulationsversuches an einem Sensor eines Fahrzeuges angegeben. Die Vorrichtung ist dazu eingerichtet, ein Verfahren gemäß zumindest einer der zuvor beschriebenen Ausführungsformen durchzuführen. Die Vorrichtung umfasst insbesondere einen Prozessor. Weiter kann die Vorrichtung Schnittstellen zum Einlesen der ersten und/oder der zweiten Messsignale sowie zur Ausgabe des Ausgangssignals umfassen.

Ferner wird ein Sensor für ein Fahrzeug angegeben. Das oben beschriebene Verfahren kann insbesondere mit den von dem Sensor gelieferten ersten und/oder zweiten Messsignalen durchgeführt werden. Alle im Zusammenhang mit dem Verfahren offenbarten Merkmale sind daher auch für den Sensor offenbart und umgekehrt.

Bei dem Sensor handelt es sich insbesondere um einen Wägesensor für ein Fahrzeug. Der Wägesensor kann beispielsweise ein Drucksensor oder ein Niveausensor oder ein Wägesensor mit einem Dehnmessstreifen sein.

Gemäß zumindest einer Ausführungsform des Sensors umfasst dieser einen ersten Messaufnehmer zur Erfassung eines Messwertes einer ersten Messgröße. Die erste Messgröße ist bevorzugt verschieden von einem elektromagnetischen Feld.

Bei der ersten Messgröße handelt es sich um eine physikalische Größe, wie beispielsweise um eine Kraft oder um Druck. Der erste Messaufnehmer kann beispielsweise einen Dehnmessstreifen umfassen oder ein Dehnmessstreifen sein. Der Dehnmessstreifen ist beispielsweise in einer Wheatstone'schen Messbrücke implementiert.

Neben dem ersten Messaufnehmer umfasst der Sensor bevorzugt auch eine Auswerteelektronik, beispielsweise einen Analog-Digital-Wandler. Die Auswerteelektronik ist Teil des Sensors, also nahe dem ersten Messaufnehmer angeordnet. Ein maximaler Abstand der Auswertelektronik zum ersten Messaufnehmer beträgt beispielsweise höchstens 15 cm oder höchstens 10 cm oder höchstens 5 cm. Mit der Auswerteelektronik kann das vom ersten Messaufnehmer erzeugte Signal insbesondere in ein weiterverarbeitbares erstes Messsignal, beispielsweise in ein digitales erstes Messsignal, umgewandelt werden. Der kleine Abstand zwischen der Auswerteelektronik und dem ersten Messaufnehmer reduziert die Gefahr, dass das vom ersten Messaufnehmer gelieferte, insbesondere analoge Signal, auf dem Weg zur Auswerteelektronik verfälscht wird.

Gemäß zumindest einer Ausführungsform umfasst der Sensor einen zweiten Messaufnehmer zur Erfassung eines Messwertes eines im Bereich des Sensors wirkenden elektromagnetischen Feldes. Der zweite Messaufnehmer ist insbesondere dazu eingerichtet, ein elektromagnetisches Feld im Bereich des ersten Messaufnehmers und/oder zwischen dem ersten Messaufnehmer und der Auswerteelektronik zu erfassen. Beispielsweise ist der zweite Messaufnehmer höchstens 10 cm von dem ersten Messaufnehmer beabstandet.

Anders ausgedrückt sind der erste Messaufnehmer und der zweite Messaufnehmer dazu eingerichtet, Messwerte unterschiedlicher Messgrößen, das heißt unterschiedliche physikalische Größen, zu erfassen. Die mit Hilfe des zweiten Messaufnehmers ermittelten zweiten Messsignale dienen dann zum Beispiel zur Kontrolle, ob die mit Hilfe des ersten Messaufnehmers gelieferten ersten Messsignale aufgrund eines angelegten elektromagnetischen Feldes verfälscht sind.

Der Sensor kann eine zweite Auswerteelektronik, zum Beispiel einen ADC, umfassen, an die der zweite Messaufnehmer Signale, insbesondere analoge Signale, übermittelt. Mit der zweiten Auswerteelektronik können dann die zweiten Messsignale erzeugt werden.

Es kann aber auch für beide Messaufnehmer die gleiche Auswerteelektronik verwendet werden.

Gemäß zumindest einer Ausführungsform umfasst der zweite Messaufnehmer eine Hallsonde und/oder eine Spule. Es kann der zweite Messaufnehmer auch eine Hallsonde oder eine Spule sein.

Darüber hinaus wird ein System zur Erfassung eines Manipulationsversuches an einem Sensor eines Fahrzeuges angegeben. Das System umfasst eine hier beschriebene Vorrichtung sowie einen hier beschriebenen Sensor.

Ferner wird ein Fahrzeug angegeben. Das Fahrzeug umfasst ein hier beschriebenes System sowie eine Achse. Der Sensor ist der Achse zugeordnet. Bei dem Fahrzeug kann es sich um ein Nutzfahrzeug, insbesondere ein Kraftfahrzeug, wie beispielsweise einen LKW oder Bus oder PKW, handeln.

Nachfolgend werden ein hier beschriebenes Verfahren, eine hier beschriebene Vorrichtung, ein hier beschriebenes System sowie ein hier beschriebener Sensor unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figuren 1A bis 1C Ablaufdiagramme von Ausführungsbeispielen des Verfahrens,
Figuren 2A und 2B manipulierte Sensoren,
Figur 3 ein Ausführungsbeispiel der Unterteilung eines Wertebereichs einer Auswerteelektronik,
Figur 4 ein Ausführungsbeispiel eines Sensors für ein Fahrzeug,
Figur 5 ein Ausführungsbeispiel eines Fahrzeuges.

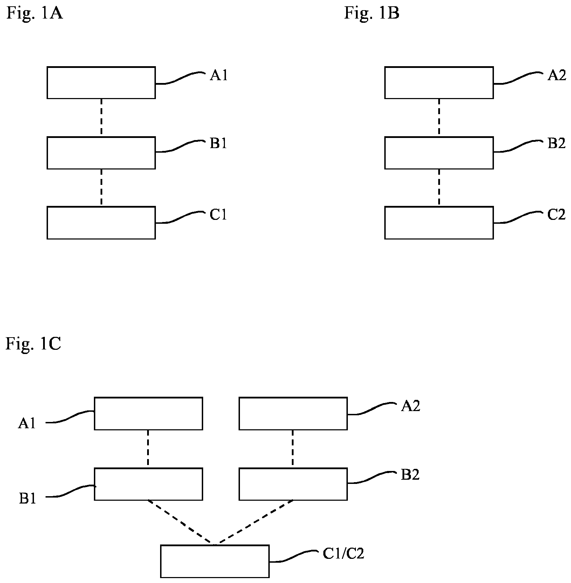

In der Figur 1A ist ein erstes Ausführungsbeispiel des Verfahrens zur Erfassung eines Manipulationsversuchs an einem Sensor eines Fahrzeuges anhand eines Ablaufdiagramms dargestellt. In einem Schritt A1) wird ein erstes Messsignal, das repräsentativ für einen mit dem Sensor erfassten Messwert der ersten Messgröße ist, eingelesen. In einem Schritt B1) wird ermittelt, ob das erste Messsignal außerhalb eines vorgegebenen Nutzbereichs liegt. Ergibt der Schritt B1), dass das erste Messsignal außerhalb eines vorgegebenen Nutzbereichs liegt (positives Ergebnis im Schritt B1)), so wird in einem Schritt C1) ein Ausgangssignal ausgegeben, das repräsentativ für einen Manipulationsversuch ist.

In der Figur 1B ist ein zweites Ausführungsbeispiel des Verfahrens zur Erfassung eines Manipulationsversuchs an einem Sensor eines Fahrzeugs anhand eines Ablauf diagramms dargestellt. Der Sensor 3 ist dabei dazu eingerichtet, im bestimmungsgemäßen Betrieb einen Messwert einer ersten Messgröße zu erfassen und ein für den Messwert der ersten Messgröße repräsentatives erstes Messsignal auszugeben, wobei die erste Messgröße verschieden von einem elektromagnetischen Feld ist. In einem Schritt A2) des Verfahrens wird ein zweites Messsignal, das repräsentativ für ein im Bereich des Sensors wirkendes elektromagnetisches Feld ist, eingelesen. In einem Schritt B2) wird ermittelt, ob das zweite Messsignal eine vorgegebene Schwelle überschreitet oder unterschreitet (positives Ergebnis im Schritt B2)). Falls dies der Fall ist, wird in einem Schritt C2) ein Ausgangssignal ausgegeben, das repräsentativ für einen Manipulationsversuch ist.

In der Figur 1C ist ein drittes Ausführungsbeispiel des Verfahrens zur Erfassung eines Manipulationsversuchs an einem Sensor eines Fahrzeuges anhand eines Ablaufdiagramms dargestellt. Bei diesem Ausführungsbeispiel werden sowohl die Schritte A1), B1) als auch die Schritte A2), B2) durchgeführt. Sind die Ergebnisse aus den Schritten B1) und/oder B2) positiv, so wird in einem Schritt C1/C2) ein Ausgangssignal ausgegeben, das repräsentativ für einen Manipulationsversuch ist.

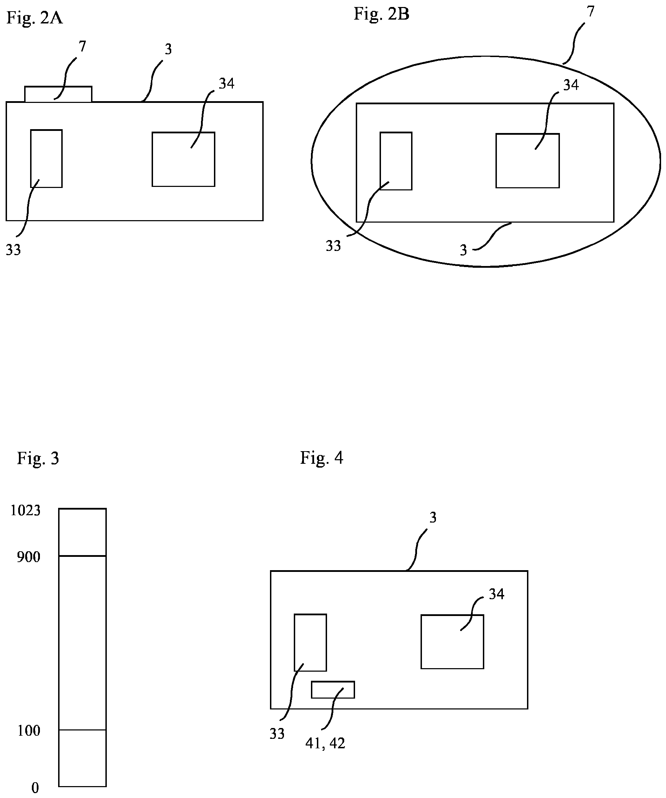

In der Figur 2A ist ein Sensor 3 dargestellt, der einen ersten Messaufnehmer 33 und eine Auswerteelektronik 34 umfasst. Bei dem Sensor 3 handelt es sich beispielsweise um einen Wägesensor 3 für ein Fahrzeug. Der erste Messaufnehmer 33 kann zum Beispiel ein Dehnmesstreifen sein, der in einer Wheatstone'schen Messbrücke implementiert ist. Bei der Auswerteelektronik 34 kann es sich beispielsweise um einen Analog-Digital-Wandler handeln. Von dem ersten Messaufnehmer 33 werden im Betrieb analoge Signale zu der Auswerteelektronik 34 geschickt und in der Auswerteelektronik 34 zu digitalen, ersten Messsignalen umgewandelt.

Auf dem Sensor 3 ist eine Spule 7 angeordnet. Die Spule 7 ist zur Manipulation der Messergebnisse des Sensors 3 aufgebracht. Durch das von der Spule 7 induzierte elektromagnetische Feld werden im Betrieb die analogen Signale des ersten Messaufnehmers 33 verfälscht. Die Spule 7 induziert ein elektromagnetisches Feld im Bereich des Messaufnehmers 33.

In der Figur 2B ist im Wesentlichen der gleiche Sensor 3 gezeigt. Vorliegend ist die Spule 7 aber größer ausgebildet, und induziert ein elektromagnetisches Feld im Bereich des gesamten Sensors 3. In der Figur 3 ist beispielhaft der Wertebereich der Auswerteelektronik aus den Figuren 2A und 2B dargestellt. Der Wertebereich ist in einen unteren Bereich, einen oberen Bereich und einen dazwischenliegenden Nutzbereich unterteilt. Die von der Auswerteelektronik gelieferten ersten Messsignale können in einem dieser drei Bereiche liegen. Liegt das erste Messsignal außerhalb des Nutzbereichs, so kann dies als ein Manipulationsversuch gedeutet werden.

In der Figur 4 ist ein Ausführungsbeispiel eines Sensors 3 gezeigt, der neben dem ersten Messaufnehmer 33 und der Auswerteelektronik 34 einen zweiten Messaufnehmer 41, 42, beispielsweise in Form einer Hallsonde 41 oder einer Spule 42, umfasst. Der zweite Messaufnehmer 41, 42 ist zur Erfassung eines Messwertes eines im Bereich des Sensors 3 wirkenden elektromagnetischen Feldes eingerichtet. Der erste Messaufnehmer 33 ist zur Erfassung eines Messwertes einer von dem elektromagnetischen Feld verschiedenen ersten Messgröße eingerichtet.

Mit Hilfe des zweiten Messaufnehmers 41, 42 werden zweite Messsignale erzeugt, die repräsentativ für einen Messwert eines im Bereich des Sensors 3 wirkenden elektromagnetischen Feldes sind. Übersteigen oder unterschreiten diese zweiten Messsignale eine vorgegebene Schwelle, so kann dies auf einen Manipulationsversuch am Sensor 3 hinweisen.

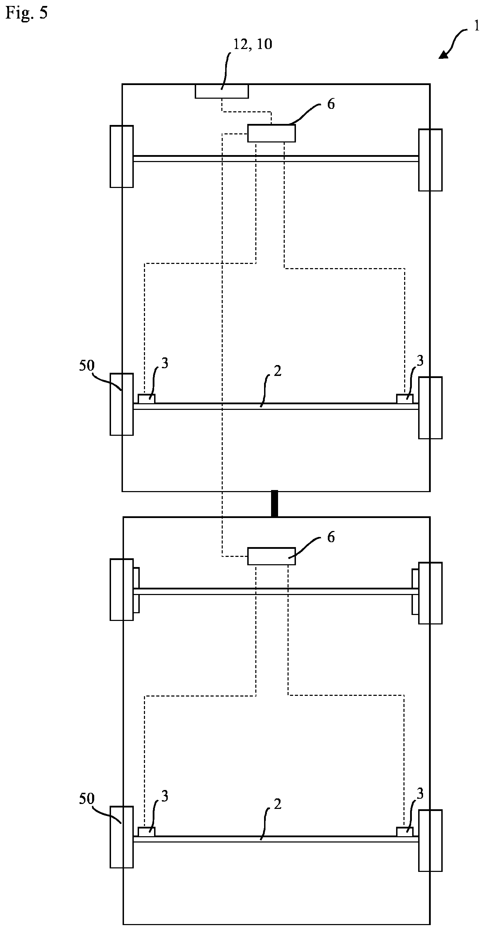

In der Figur 5 ist ein Ausführungsbeispiel eines Fahrzeuges 1 in Draufsicht dargestellt. Das Fahrzeug 1 umfasst eine Zugmaschine und einen Anhänger. Die Zugmaschine und der Anhänger sind auf Achsen 2 gelagert, an deren Enden Räder 50 angeordnet sind. Auf den Achsen 2 sind Sensoren 3 angeordnet.

Das Fahrzeug 1 umfasst außerdem ein Ausführungsbeispiel eines Systems zur Erfassung eines Manipulationsversuches an zumindest einem Sensor 3 des Fahrzeugs 1. Das System umfasst eine Vorrichtung 10 und mehrere der Sensoren 3. Die Sensoren 3 können zum Beispiel wie im Zusammenhang mit der Figur 4 beschrieben ausgebildet sein.

Die Vorrichtung 10 ist dazu eingerichtet, ein wie zuvor beschriebenes Verfahren durchzuführen. Die dazu nötigen ersten und/oder zweiten Messsignale werden von den Sensoren 3 geliefert. Sowohl die Zugmaschine als auch der Anhänger umfassen eine Steuereinheit 6, über die die ersten und/oder zweiten Messsignale zur Vorrichtung 10 geleitet werden. Die Vorrichtung 10 umfasst zum Beispiel einen Prozessor sowie Schnittstellen für den Eingang der Messsignale und für den Ausgang des Ausgangssignals.

Das Fahrzeug 1 beziehungsweise das System umfasst außerdem eine Anzeige- und/oder Aufzeichnungseinheit 12. Vorliegend ist die Vorrichtung 10 in der Anzeige- und/oder Aufzeichnungseinheit 12 integriert. Wird ein Manipulationsversuch detektiert, so wird bei dem Verfahren ein Ausgangssignal erzeugt, das repräsentativ für den Manipulationsversuch ist. Dieses Ausgangssignal kann in der Anzeige- und/oder Aufzeichnungseinheit 12 gespeichert oder von dieser einem Fahrzeugführer angezeigt werden. Beispielsweise handelt es sich bei der Anzeige- und/oder Aufzeichnungseinheit 12 um einen digitalen Tachographen.

## Patentansprüche

1. Verfahren zur Erfassung eines Manipulationsversuches an einem Sensor (3) eines Fahrzeuges (1), wobei der Sensor (3) ein Wägesensor (3) ist, der einer Achse (2) des Fahrzeuges (1) zugeordnet ist, wobei der Sensor (3) ein Drucksensor oder ein Niveausensor oder ein Sensor mit einem Dehnmessstreifen ist und wobei der Sensor (3) dazu eingerichtet ist, im bestimmungsgemäßen Betrieb einen Messwert einer ersten Messgröße zu erfassen und ein für diesen Messwert repräsentatives erstes Messsignal auszugeben, wobei die erste Messgröße verschieden von einem elektromagnetischen Feld ist und wobei die erste Messgröße eine auf die Achse (2) des Fahrzeuges (1) wirkende Kraft oder Kraftverteilung ist,
umfassend die Schritte:
A2) Einlesen eines zweiten Messsignals, das repräsentativ für einen Messwert eines im Bereich des Sensors (3) wirkenden elektromagnetischen Feldes ist, wobei das zweite Messsignal repräsentativ für einen Messwert eines mit Hilfe einer Hallsonde (41) und/oder einer Spule (42), die in dem Raumbereich, der von dem Sensor (3) eingenommen ist, oder in einem Teilbereich dieses Raumbereichs angeordnet sind, erfassten elektromagnetischen Feldes ist;
B2) Ermitteln, ob das zweite Messsignal eine vorgegebene Schwelle unterschreitet oder überschreitet;
C2) Ausgeben eines Ausgangssignals, das repräsentativ für einen Manipulationsversuch an dem Sensor (3) ist, falls im Schritt B2) ermittelt wird, dass das zweite Messsignal die vorgegebene Schwelle unterschreitet oder überschreitet;
und umfassend die Schritte:
A1) Einlesen des ersten Messsignals, das repräsentativ für den mit dem Sensor (3) erfassten Messwert der ersten Messgröße ist;
B1) Ermitteln, ob das erste Messsignal außerhalb eines vorgegebenen Nutzbereichs liegt;
C1) Ausgeben eines Ausgangssignals, das repräsentativ für einen Manipulationsversuch an dem Sensor (3) ist, falls im Schritt B1) ermittelt wird, dass das erste Messsignal außerhalb des vorgegebenen Nutzbereichs liegt.

2. Verfahren nach Anspruch 1,
wobei die Schritte A1) bis C1) und/oder A2) bis C2) mehrmals hintereinander ausgeführt werden.

3. Verfahren nach einem der vorhergehenden Ansprüche,
wobei das Ausgangssignal Informationen darüber beinhaltet, zu welchem Zeitpunkt das Ausgangssignal erzeugt wurde.

4. Vorrichtung (10) zur Erfassung eines Manipulationsversuches an einem Sensor (3) eines Fahrzeuges (1), die dazu eingerichtet ist, ein Verfahren nach einem der vorhergehenden Ansprüche auszuführen.

5. System zur Erfassung eines Manipulationsversuches an einem Sensor (3) eines Fahrzeuges (1), umfassend:
- eine Vorrichtung (10) nach Anspruch 4,
- einen Sensor (3) für ein Fahrzeug (1), umfassend:
- einen ersten Messaufnehmer (33) zur Erfassung eines Messwertes einer ersten Messgröße, die verschieden von einem elektromagnetischen Feld ist,
- einen zweiten Messaufnehmer (41, 42) zur Erfassung eines Messwertes eines im Bereich des Sensors (3) wirkenden elektromagnetischen Feldes, wobei
- der zweite Messaufnehmer (41, 42) eine Hallsonde (41) und/oder eine Spule (42) umfasst.

## Claims

1. Method for detecting attempted manipulation of a sensor (3) of a vehicle (1), wherein the sensor (3) is a weighing sensor (3) assigned to an axle (2) of the vehicle (1), wherein the sensor (3) is a pressure sensor or a level sensor or a sensor with a strain gauge, and wherein the sensor (3) is configured, during intended operation, to record a measured value of a first measurement variable and to output a first measurement signal representative of this measured value, wherein the first measurement variable differs from an electromagnetic field, and wherein the first measurement variable is a force or force distribution acting on the axle (2) of the vehicle (1),
comprising the steps of:
A2) reading in a second measurement signal representative of a measured value of an electromagnetic field acting in the region of the sensor (3), wherein the second measurement signal is representative of a measured value of an electromagnetic field detected with the aid of a Hall probe (41) and/or a coil (42) arranged in the spatial region occupied by the sensor (3) or in a section of this spatial region;
B2) determining whether the second measurement signal undershoots or exceeds a predefined threshold;
C2) outputting an output signal representative of attempted manipulation of the sensor (3) if it is determined in step B2) that the second measurement signal undershoots or exceeds the predefined threshold;
and comprising the steps of:
A1) reading in the first measurement signal representative of the measured value of the first measurement variable which is recorded using the sensor (3);
B1) determining whether the first measurement signal is outside a predefined useful range;
C1) outputting an output signal representative of attempted manipulation of the sensor (3) if it is determined in step B1) that the first measurement signal is outside the predefined useful range.

2. Method according to Claim 1,
wherein steps A1) to C1) and/or A2) to C2) are carried out several times in succession.

3. Method according to one of the preceding claims,
wherein the output signal contains information relating to the time at which the output signal was generated.

4. Apparatus (10) for detecting attempted manipulation of a sensor (3) of a vehicle (1), which apparatus is configured to carry out a method according to one of the preceding claims.

5. System for detecting attempted manipulation of a sensor (3) of a vehicle (1), comprising:
- an apparatus (10) according to Claim 4,
- a sensor (3) for a vehicle (1), comprising:
- a first measuring sensor (33) for recording a measured value of a first measurement variable which differs from an electromagnetic field,
- a second measuring sensor (41, 42) for recording a measured value of an electromagnetic field acting in the region of the sensor (3), wherein
- the second measuring sensor (41, 42) comprises a Hall probe (41) and/or a coil (42).

## Revendications

1. Procédé permettant de détecter une tentative de manipulation sur un capteur (3) d'un véhicule (1), le capteur (3) étant un capteur de poids (3) qui est associé à un essieu (2) du véhicule (1), le capteur (3) étant un capteur de pression ou un capteur de niveau ou un capteur doté d'une jauge de contrainte, et le capteur (3) étant conçu pour détecteur dans un mode de fonctionnement conforme une valeur de mesure d'une première grandeur de mesure et pour émettre un premier signal de mesure représentatif de cette valeur de mesure, la première grandeur de mesure étant différente d'un champ électromagnétique, et la première grandeur de mesure étant une force ou une distribution de force agissant sur l'essieu (2) du véhicule (1),
comprenant les étapes consistant à :
A2) lire un deuxième signal de mesure qui est représentatif d'une valeur de mesure d'un champ électromagnétique agissant au niveau du capteur (3), le deuxième signal de mesure étant représentatif d'une valeur de mesure d'un champ électromagnétique détecté à l'aide d'une sonde de Hall (41) ou/ou d'une bobine (42) qui est/sont disposée(s) dans la zone spatiale occupée par le capteur (3) ou dans zone partielle de cette zone spatiale ;
B2) déterminer si le deuxième signal de mesure soupasse ou dépasse un seuil prédéfini ;
C2) émettre un signal de sortie qui est représentatif d'une tentative de manipulation sur le capteur (3) s'il est déterminé à l'étape B2) que le deuxième signal de mesure soupasse ou dépasse le seuil prédéfini ;
et comprenant les étapes consistant à :
A1) lire le premier signal de mesure qui est représentatif de la valeur de mesure de la première grandeur de mesure, détectée par le capteur (3) ;
B1) déterminer si le premier signal de mesure est situé en dehors d'une plage utile prédéfinie ;
C1) émettre un signal de sortie qui est représentatif d'une tentative de manipulation sur le capteur (3) s'il est déterminé à l'étape B1) que le premier signal de mesure est situé en dehors de la plage utile prédéfinie.

2. Procédé selon la revendication 1, dans lequel les étapes A1) à C1) et/ou A2) à C2) sont exécutées consécutivement à plusieurs reprises.

3. Procédé selon l'une quelconque des revendications précédentes, dans lequel le signal de sortie contient des informations concernant le moment où le signal de sortie a été généré.

4. Dispositif (10) permettant de détecter une tentative de manipulation sur un capteur (3) d'un véhicule (1) qui est conçu pour exécuter un procédé selon l'une quelconque des revendications précédentes.

5. Système permettant de détecter une tentative de manipulation sur un capteur (3) d'un véhicule (1), comprenant :
- un dispositif (10) selon la revendication 4,
- un capteur (3) pour un véhicule (1), comprenant :
- un premier transducteur (33) pour détecter une valeur de mesure d'une première grandeur de mesure qui est différente d'un champ électromagnétique,
- un deuxième transducteur (41, 42) pour détecter une valeur de mesure d'un champ électromagnétique agissant au niveau du capteur (3), dans lequel
- le deuxième transducteur (41, 42) comprend une sonde de Hall (41) et/ou une bobine (42).
